Europäisches Patentamt

European Patent Office

Office européen des brevets

(11) Publication number: 0 293 141
A2

## (12) EUROPEAN PATENT APPLICATION

(21) Application number: 88304587.4

(22) Date of filing: 20.05.88

(51) Int. Cl.4: B26D 1/50

(30) Priority: 23.05.87 GB 8712286

(43) Date of publication of application:
30.11.88 Bulletin 88/48

(84) Designated Contracting States:
BE DE ES FR GB IT

(71) Applicant: VACFORM PLASTICS LIMITED
Pelsall Road
Brownhills Walsall West Midlands WS8
7HN(GB)

(72) Inventor: Matthews, Peter Thomas
c/o Vacform Plastics Limited Pelsall Road
Walsall West Midlands WS8 7HN(GB)
Inventor: Foster, David John
c/o Vacform Plastics Limited Pelsall Road
Walsall West Midlands WS8 7HN(GB)

(74) Representative: Skinner, Michael Paul et al
c/o Swindell & Pearson 48 Friar Gate
Derby DE1 1GY(GB)

(54) Cutting stacked sheets.

(57) Apparatus (10) for cutting stacks of thin sheets, such as corrugated plastics sheets has a bed (12) and two blades (14). A stack of sheets is drawn along the bed (12) towards the blade (14), which trim opposite edges of the stack. The cutting edge of the blades (14) has sharp teeth in the same plane as the body of the blade, in order to produce a high quality, straight cut.

FIG.1

## Cutting Stacked Sheets

The present invention relates to apparatus and methods for cutting stacked sheet. In particular, but not exclusively, the invention concerns cutting stacks of corrugated sheets of plastics materials.

Corrugated sheets of plastics material are used for instance in the construction of cooling assemblies for power station cooling towers. A plurality of identical corrugated sheets are put together with adjacent sheets inverted with respect to one another, so that flow passages for cooling water are defined between the corrugations. Two opposite edges of the sheets define the openings of the flow passages and lie transverse to the direction of flow, while the other two edges meet to be sealed along the direction of flow.

It is important that all four edges of each sheet are accurately and neatly formed. The edges which extend transverse to the flow direction must withstand the impact of large volumes of cooling water at high pressure. We have appreciated that any burrs on these edges, for instance as a result of manufacturing faults, can be caught by the cooling water, and this quickly causes serious damage to the sheet. The sheet may tear and torn flaps may fold over to block one or more flow passages, thereby reducing the effectiveness of the cooling elements, and necessitating greater flow through the remaining flow passages, which in turn increases the likelihood of damage resulting from any burrs elsewhere. This problem is exacerbated by the requirement that the corrugated sheets be made of relatively light weight plastics material, and may for instance be as little as 0.3 millimetres thick. The sheets can easily be torn. Hence, even small burrs can cause significant problems, but machining the sheets is difficult because of the likelihood of tearing and burr formation.

The edges which are to be sealed must also be accurately formed, in order that an accurate seal may be formed.

It is an object of the present invention to provide a method and apparatus for cutting stacked sheets with a sufficiently accurate and high quality cut as to provide an improved cooling tower element of the type described.

Apparatus according to a first aspect of the invention is characterised by comprising a bed for supporting stacked sheets, a blade for cutting stacked sheets supported on the bed, and drive means operable to move the supported stack relative to the blade for cutting, the blade being a knife blade which, in use, moves substantially perpendicular to the direction of said relative movement, and the blade having a cutting edge formed by a series of spaced teeth projecting from the body of the blade, the teeth and body being co-planar along the blade portion which engages the stack, and the cutting edge being sharpened along the said engaging portion.

Preferably, the teeth are formed by material remaining after lengths of the edge of the blade are cut away. The teeth are preferably pointed. The blade or blades may be endless and be driven, in use, unidirectionally along their length.

Apparatus according to a second aspect of the invention is characterised by comprising a bed for supporting stacks of sheets, a blade for cutting stacks supported on the bed, and drive means operable to move the supported stacks relative to the blade, the blade being a toothed, circular blade of which no more than one half projects through the bed, the blade rotating so that the teeth are moving away from the bed at the point of first contact with a stack.

Preferably there are guide surface adjacent the blade, the stack being retained between the guide surfaces and the bed as they are cut.

In this aspect, the blade is a circular disc carrying peripheral teeth, each tooth being generally T-shaped and having a shank extending from the edge of the disc, and a cutting edge perpendicularly to the disc.

In either aspect, the apparatus preferably comprises a second blade as aforesaid, the drive means being operable to move both blades relative to the supported sheets, whereby two cuts may be made simultaneously in a stack of sheets passing between the blades.

The drive means preferably comprises means operable, in use, to maintain a constant speed of relative movement between the supported sheets and the blade or blades. The drive means are preferably operable to move the supported sheets along the bed, past the blade or blades. The drive means may comprise a projection for engaging a stack supported on the bed, to draw the stack past the blade or blades, the engaging projection being so located as to engage a stack at or near the mid point of one side of the stack. The projection is preferably pivotally connected so as to pivot out of engagement with a stack when moving in a first direction, and to pivot back to engage the stack when moving in the reverse direction.

The bed preferably comprises guide formations for guiding the stack as it moves. The bed may extend beyond the blade or blades to support stacks of cut sheets. The bed is preferably sufficiently long to allow the drive means to drive a line of stacks, the line comprising at least one uncut stack, a stack being cut by the blade or blades and at least one cut stack which provides resistance to movement of the lines across the bed.

Apparatus according to a third aspect of the invention is for cutting stacked sheets, characterised by comprising a bed for supporting stacked sheets, two blades for cutting stacked sheets supported on the bed, and drive means operable to provide relative movement between the supported stack and the blades to pass the stack between the blades to simultaneously produce two cuts therein.

The invention further provides a method of cutting a stack of sheets, characterised in that the stack is placed on the bed of apparatus according to the invention and the drive means are operated to move the supported sheets between the blades, for simultaneously making two cuts therein.

Apparatus embodying the invention, and its manner of use will now be described in more detail, by way of example only, and with reference to the accompanying drawings, all of which are schematic and/or diagrammatic, and in which:

Fig. 1 is a perspective view of apparatus embodying the first aspect of the invention;

Fig. 2 is an end view of the apparatus of Fig. 1;

Fig. 3 is a detail of the knife blade;

Fig. 4 is a perspective view of apparatus embodying the second aspect;

Fig. 5 shows the blades and associated guides of Fig. 4;

Fig. 6 is an elevation of the drive means of Fig. 4; and

Fig. 7 is an end view of the apparatus of Fig. 4, in use.

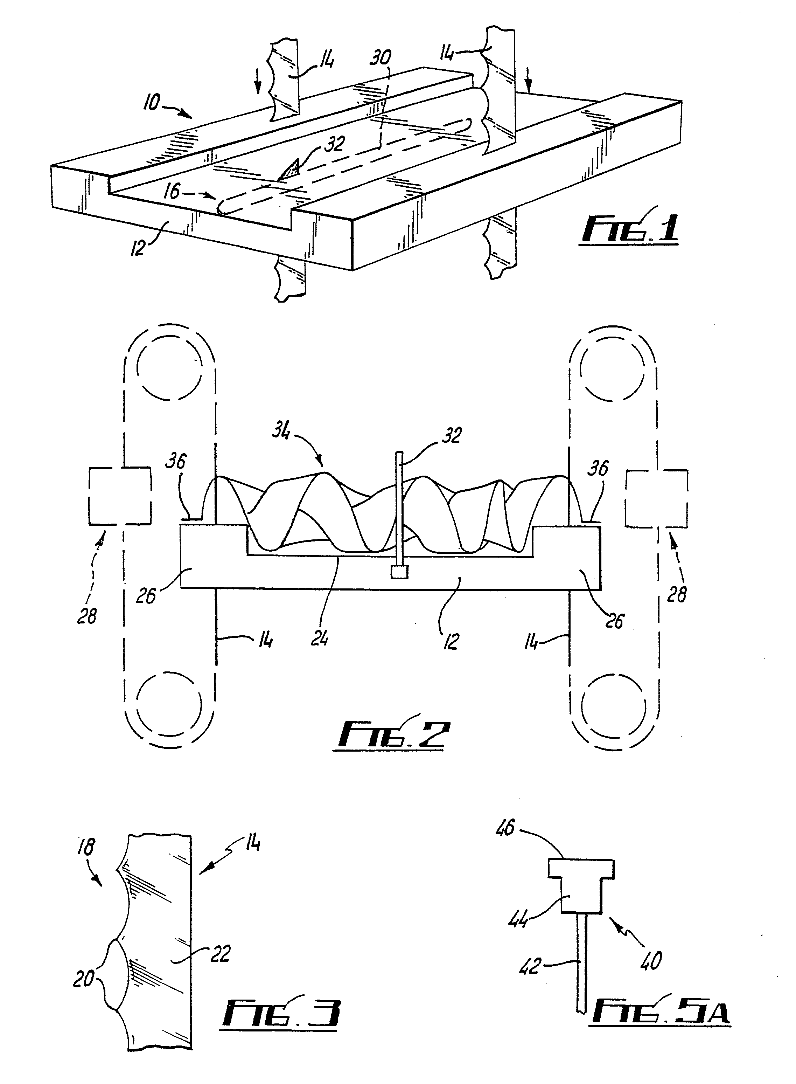

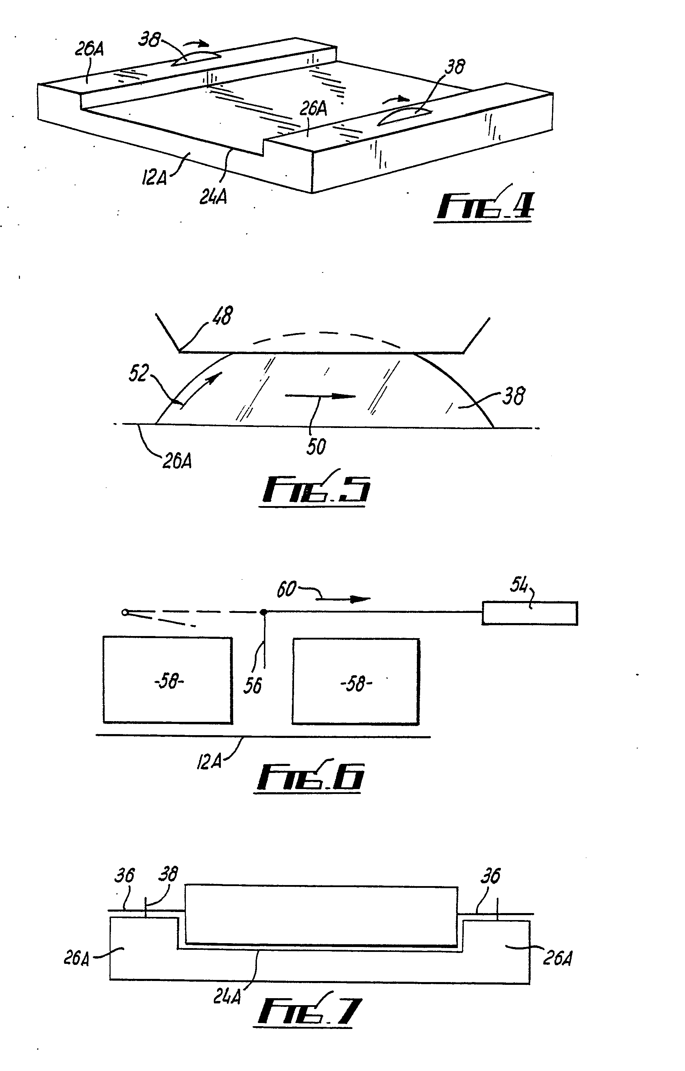

Fig. 1 shows apparatus 10 for cutting stacked sheets. The apparatus 10 comprises a bed 12 for supporting stacked sheets. Blades 14 are provided for cutting stacked sheets supported on the bed 12. Drive means 16 are operable to move the supported stack relative to the blades 14 for cutting. The blades 14 are knife blades which, in use, move vertically (perpendicular to the direction of movement of the stacks). The blades 14 have cutting edges 18 (Fig. 3) formed by a series of spaced teeth 20 projecting from the body 22 of the blade 14. The teeth 20 and body 22 are coplanar, in use, along the blade portion which engages the stack. The cutting edge 18 is sharpened along the said engaging portion.

The bed 12 has a central well 24 which provides a horizontal surface on which a stack of sheets may rest, and along which they may slide. Two parallel walls 26 extend along the edges of the well 24. The blades 14 are located vertically in the walls 26. The blades are knife blades, as will be described below, and are each an endless loop mounted on a band saw 28 shown schematically in Fig. 2. The band saws 28 drive the blades 14 endlessly around their length in a direction so as to move them down through the walls 26 as they cut.

Embedded within the floor of the well 24 is a chain 30 with associated guide wheels and a drive motor. The driven chain 30 carries an upwardly projecting fin 32 which engages a stack resting on the bed, so that the stack may be drawn towards the blades 14 as the chain 30 moves. The chain 30 runs parallel to the walls 26 and is located mid way between them.

The shape and position of the well 24 and walls 26 are chosen to ensure that the drive 16 co-operates with the inwardly facing surfaces of the walls 26 to move a stack of sheets smoothly and reliably towards the blades 14, so that the stack is presented to the blades 14 at an accurately repeatable position and orientation. Furthermore, the drive to the chain 30 is controlled to ensure a constant speed.

Fig. 2 shows a single sheet resting on the bed 12. The sheet has complex corrugations in the central region 34 finished by peripheral flanges 36. As can be seen from Fig. 2, the central corrugated region 34 is corrugated (in section), by corrugations which waver (in plan). Inclined surfaces of the corrugations bear on the walls 26 to prevent the sheet rotating about a vertical axis when moving along the bed 12. The blades 14 are spaced to cut along the corrugations to provide a trimmed, corrugated edge which will partly define entry apertures of flow channels for the cooling packs described above.

The bed 12 is sufficiently long to allow at least three stacks to be simultaneously present thereon. These will be a first stack being fed towards the blades, a second stack being cut by the blades 14, and a third stack which has been cut and is moving away from the blades 14, as it is pushed by the stack being cut (which is in turn pushed by the approaching stack driven by the drive 16). The cut stack remains on the bed 12 to provide resistance to movement of the stack being cut and this has been found to further enhance the accuracy with which the orientation of the stacks is maintained as they move between the blades 14.

A section of the blade 14 is shown in more detail in Fig. 3. The blade 14 is made from a flat band of stainless steel of 26 gage, for instance. The cutting edge 18 is first scalloped along its entire length by scallops which are sufficiently closely positioned to meet to leave pointed teeth 20 rather than straight unscalloped lengths of the original edge. The entire length of the cutting edge 18 is then sharpened to a razor edge. It is important to note that the teeth 20 are not set. That is, they are not bent out of the plane of the body 22 of the blade 14.

The cut provided by blades of the type shown in Fig. 3 has been found to be very much better than that provided by either a standard band saw blade or a band knife blade, when cutting thin (0.3 millimetre) corrugated plastics sheets. The reason for the improvement may not be entirely understood, but are believed to include the following. A traditional band saw uses a blade with set teeth which move down towards the bed of the machine. They tend to engage the article being cut and pull it down towards the bed. The blade therefore tends to hold the workpiece and hack at it to produce a wide rough cut and a high degree of burring. Such a cut is unsatisfactory for reasons discussed above. A standard band knife blade made from a band of stainless steel sharpened along a linear edge gives a clean, substantially burr free cut, but the blade tends to deform when cutting a corrugated article, and to follow the corrugations to some extent, to that a straight cut cannot be achieved.

The blade 14 of Fig. 3 uses the knife edge to provide a clean cut. The scalloping allows the blade to release the workpiece as each scallop passes, to be re-engaged by the following tooth 20. This allows the blade to flex back to its natural position, so that the tendency for the blade to deform and produce a none-linear cut is greatly reduced, or substantially eliminated.

The remaining figures show an alternative apparatus especially for cutting the peripheral flanges 36 which remain on those edges of sheets which have passed transversely along the bed 12 of the apparatus of Fig. 1. In Figs. 4 and 5, the bed 12A has a well 24A edged by walls 26A. These act to guide sheets in the same manner as indicated in Fig. 2. Mid-way along the walls 26A, a circular saw blade 38 is provided. Less than half of the blade projects up through the walls 26A, so that as a sheet approaches along the bed 12A it approaches an obtuse angle formed between the walls 26A and the saw blades 38. the blades 38 are rotating to move up and away from the upper surface of the wall 26A at this obtuse angle, so that the edge of the blades 38 are moving both up and in the direction of movement of the sheet. Fig. 5A shows a tooth 40 of one of the blades 38. This is mounted on the edge of the blade disc 42 and comprises a radial shank 44 and a transverse cutting edge 46, for instance of tungsten carbide. It will be noted that the top of the cutting edge is transverse to the disc 42, so that it cuts by an action more akin to rubbing than to gouging. The teeth are not shown in Fig. 5, for reasons of clarity.

To either side of each blade 38 there is preferably provided a guide surface 48. A stack of sheets must pass between the guide surface 48 and the wall 26 so that in so doing, the blade 38 may cut. In Fig. 5 the direction of movement of the stack is indicated by the arrow 50, while arrow 52 indicates the direction of rotation of the blade 38.

The bed 12A is sufficiently long to support at least three stacks for reasons described above. The drive means used in this embodiment are shown highly schematically in Fig. 6 and comprise a hydraulic or pneumatic actuator 54 which drives a pivotally mounted flap 56 for engaging a stack indicated schematically at 58. As the flap 58 is drawn in the direction shown by the arrows 60, the flap 56 engages a stack 58 to draw the stack 58 in the direction 60. In this phase of the operation, the flap 56 is restrained by appropriate means from pivoting past the vertical position shown. Once the actuator has fully retracted to draw a stack past the blade 38, it is advanced to move the flap 56 away from the blades 38, to pick up the next stack 58. During this phase of the movement, the flap hinges up to the position shown in broken lines in Fig. 6 and in which the flap 56 may pass over the stack 58. Once clear of the stack 58, the flap 56 can swing down to hand vertically, so as to pick up the next stack once the actuator begins to retract. Known hydraulic or pneumatic techniques allow the actuator speed to be precisely controlled, so that stacks 58 are presented to the blades 38 with accurate speed and with accurate alignment by virtue of the guiding walls 26A. Alternatively, hydraulic or pneumatic control may be replaced by mechanical arrangements providing accurate speed control, such as belt or chain drives from a constant speed motor.

The blades 38 are sufficiently widely spaced from each other to cut the flanges 36 of the stack. During this cutting, the teeth 40 move up from beneath the flange 36, contrary to normal techniques, and are moving in the same direction as the stack 58, again contrary to normal techniques. These features prevent the teeth 40 trapping the flanges 36 between them and the walls 26A and so prevent cutting by gouging and breaking, so that a clean cut can be obtained. The quality of the cut can be further enhanced by using an extremely rapidly rotating blade 38 to cut a relatively slowly moving flange 36, so that each tooth 40 skims the surface of the cut to take off a very small amount of material, which is carried away from the cut as the tooth 40 continues to move. It has been found that a higher quality cut is achieved than would be possible with a normal circular saw, even when used with blade teeth like that shown in Fig. 5.

It will again be realised that the abutment of the stack being cut and the previously cut stack enhance the quality of alignment of the stack being cut.

The apparatus described above has been found to allow stacks of sheet to be cut to accuracies similar to the accuracy of press cutting, but allow a much greater output of cut sheet to be provided from significantly cheaper machinery. Moreover, press cutting cannot be applied to a cut along a corrugation, but could only cut the flanges 36.

Modifications and variations to the apparatus described above may be made without departing from the scope of the present invention. For instance, the drive means described could be used in either apparatus described, as appropriate. Other materials and dimensions could be chosen as appropriate for a particular cutting operation.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus (10) for cutting stacked sheets, characterised by comprising a bed (12) for supporting stacked sheets, a blade (14) for cutting stacked sheets (34) supported on the bed, and drive means (16) operable to move the supported stack relative to the blade for cutting, the blade being a knife blade which, in use, moves substantially perpendicular to the direction of said relative movement, and the blade having a cutting edge (18) formed by a series of spaced teeth (20) projecting from the body (22) of the blade, the teeth and body being co-planar along the blade portion which engages the stack, and the cutting edge being sharpened along the said engaging portion.

2. Apparatus according to claim 1, characterised in that the teeth (20) are formed by material remaining after lengths of the edge (18) of the blade (14) are cut away.

3. Apparatus according to claim 2, characterised in that the teeth (20) are pointed.

4. Apparatus according to any of the preceding claims, characterised in that the blade or blades (14) are endless and are driven, in use, unidirectionally along their length.

5. Apparatus for cutting stacked sheets, characterised by comprising a bed (12A) for supporting stacks of sheets, a blade (38) for cutting stacks supported on the bed, and drive means (54,56) operable to move the supported stacks relative to the blade, the blade being a toothed, circular blade of which no more than one half projects through the bed, the blade rotating so that the teeth are moving away from the bed at the point of first contact with a stack.

6. Apparatus according to claim 5, characterised by comprising guide surfaces (48) adjacent the blade, the stack being retained between the guide surfaces and the bed as they are cut.

7. Apparatus according to claim 5 or 6, characterised in that that blade is a circular disc (42) carrying peripheral teeth (40), each tooth being generally T-shaped and having a shank (44) extending from the edge of the disc, and a cutting edge (46) perpendicular to the disc.

8. Apparatus according to any of the preceding claims, characterised by comprising a second blade (14,38) as aforesaid, the drive means (16) being operable to move both blades relative to the supported sheets, whereby two cuts may be made simultaneously in a stack of sheets passing between the blades.

9. Apparatus according to any of the preceding claims, characterised in that the drive means (16) comprise means operable, in use, to maintain a constant speed of relative movement between the supported sheets and the blade or blades.

10. Apparatus according to claim 9, characterised in that the drive means (16) are operable to move the supported sheets along the bed (12,12A), past the blade or blades (14,38).

11. Apparatus according to claim 10, characterised by a projection (32,56) for engaging a stack supported on the bed (12,12A), to draw the stack past the blade or blades (14,38), the engaging projection being so located as to engage a stack at or near the mid point of one side of the stack.

12. Apparatus according to claim 11, characterised in that the projection (56) is pivotally connected so as to pivot out of engagement with a stack when moving in a first direction, and to pivot back to engage the stack when moving in the reverse direction.

13. Apparatus according to claim 10, 11 or 12, characterised in that the bed (12,12A) comprises guide formations (26,26A) for guiding the stack as it moves.

14. Apparatus according to any of claims 10 to 13, characterised in that the bed (12,12A) extends beyond the blade or blades (14,38) to support stacks of cut sheets.

15. Apparatus according to claim 14, characterised in that the bed (12,12A) is sufficiently long to allow the drive means (16) to drive a line of stacks, the line comprising at least one uncut stack, a stack being cut by the blade or blades (14,38) and at least one cut stack which provides resistance to movement of the lines across the bed.

16. Apparatus for cutting stacked sheets, characterised by comprising a bed (12,12A) for supporting stacked sheets, two blades (14,38) for cutting stacked sheets supported on the bed, and drive means (16) operable to provide relative movement between the supported stack and the blades to pass the stack between the blades to simultaneously produce two cuts therein.

17. A method of cutting a stack of sheets, characterised in that the stack is placed on the bed (12,12A) of apparatus according to any preceding claim, the drive means (16) being operated to move the supported sheets between the blades (14,38), for simultaneously making two cuts therein.

_FIG.1_

_FIG.2_

_FIG.3_

_FIG.5A_

**FIG.4**

**FIG.5**

**FIG.6**

**FIG.7**